# EUROPEAN PATENT SPECIFICATION

(11) **EP 2 549 023 B1**
(45) Date of publication and mention of the grant of the patent: **04.07.2018**
(21) Application number: 12153668.4
(22) Date of filing: 02.02.2012
(51) Int. Cl.: E02D 17/20

(54) **net structure for geotechnical use**
Netzstruktur für geotechnische Anwendungen
Structure de filet pour les applications géotechniques

(30) Priority: 03.02.2011 IT MI20110149
(43) Date of publication of application: 23.01.2013
(73) Proprietor: Tenax S.p.A., 23897 Viganò (Lecco) (IT)
(72) Inventor: Maggioni, Pierluigi, I-23891 Barzanò (LC) (IT); Beretta, Cesare, I-23871 Lomagna (LC) (IT)
(74) Representative: Ponzellini, Gianmarco

(56) References cited:
- GB-A- 2 252 985

## Description

The present description relates to a net structure in particular suitable for geotechnical applications.

The structure that is the object of the embodiment described herein below, made of plastic and monolithic material, is particularly suitable for drainage and in part also for containing the terrain on which it is used that, merely by way of example, can be constituted by road embankments, river banks or even special sites such as tips or the like.

### BACKGROUND

As is known, the market offers numerous types of plastic net developed for enabling better drainage of the terrain and possibly a filtering and/or a containing of the terrain.

Among the various nets of known type, document US 6972269 is cited, which illustrates a net structure for geotechnical applications comprising a first and a second layer of wire interconnected at nodes, by means of spacer elements destined to maintain the longitudinal and transversal wires of the net transversally distanced.

A coupling to a filtering element constituted by a textile is comprised at a lie plane of a series of the wires.

Also known, from document US 2009/0075020, is a filtering and draining net for geotechnical applications which is constituted by a sandwich-type structure internally exhibiting a monolithic net structure exhibiting continuous longitudinal ribs to which respective nets are superiorly and inferiorly coupled, such that the corresponding cylindrical-section longitudinal wires couple exactly at the continuous longitudinal ribs.

In the lie planes defined by the links, filtering elements made of textile material are superiorly and inferiorly rigidly constrained (by gluing or welding), which each close the openings defined by the links with respect to the external environment in which the filter and drainage net is destined to work.

The textile structures exclusively enable percolation of liquids, such as, usually, water, so that the channels defined by the longitudinal ribs remain free and enable easier drainage.

Further, the dimensions of the links are selected such as to prevent collapses of the textile material which can lead to partial or total occlusion of the channels with a reduction in the drainage flow rate of the net.

A known document, GB 2252985, discloses a net structure made of plastic material obtained starting from a box configuration in which continuous longitudinal ribs are closed by two opposite sheets, appropriately perforated at respect longitudinal channels defined between the ribs.

The box structure can be stretched in one or the other of the longitudinal and transversal directions, or even in both directions.

### SUMMARY

Though the above-described prior art effectively performs its set tasks, it has however been seen to be liable to improvement in relation to certain aspects.

Firstly it has been noted that the product can be improved in its adaptation to the ground, its ability to receive and maintain an eventual filtering layer constrained thereto and its performance in terms of mechanical resistance, especially in a transversal direction to the continuous ribs.

It has also been noted that the desired structural characteristics can be obtained by adopting production procedures that are different to the ones commonly used for realising the above-cited nets, in any case obtaining optimal mechanical properties, reducing the weights per square metre of the net and improving the performance of the product in cost-effective terms.

Further, though endowed with considerable drainage capacity, the described product of the first prior art exhibits substantially no earth-containing properties, as it is exclusively able to facilitate a filtering and a draining of the liquids.

Further, from the point of view of production costs, and final costs of the product, it has been shown to be susceptible to improvement without sacrificing any of its peculiar features.

A general objective according to the aspects described in the following is such as to substantially resolve the operating drawbacks and/or limitations evidenced above.

A first aim according to some of the described aspects is to provide a net structure which is able not only to drain the liquids, but also to retain the earth, thus effectively also constituting a reinforcement.

A further aim, according to some of the described aspects, is to lower production costs and simplify eventual elimination operations of the product.

A further aim, according some of the described aspects is to increase the mechanical characteristics of the structure by contemporarily reducing the weight thereof per surface unit. These and other aims which will better emerge during the course of the following description are substantially attained by a net structure according to one or more of the appended claims.

A first independent aspect relates to a net structure, in particular for geotechnical applications, comprising: a plurality of continuous ribs arranged substantially parallel along a first development axis; a plurality of first continuous filaments arranged substantially parallel to one another and transversally of the plurality of ribs, the first filaments being constrained to the ribs at nodes lying in a first lie plane; a plurality of second continuous filaments arranged substantially parallel to one another and transversally of the plurality of ribs, the second continuous filaments being constrained to the ribs at nodes lying in a second lie plane, the second lie plane being opposite the first lie plane with respect to the ribs; the plurality of first and second filaments defining an internal volume of the net structure comprised between the first and the second lie plane, the internal volume being subdivided by the plurality of ribs into a predetermined number of substantially parallel channels, characterised in that at least the first filaments and/or the second filaments are defined by laminar structures exhibiting respective surfaces which are flat and which lie substantially in the respective lie plane.

A further independent aspect relates to a net structure, in particular for geotechnical applications, comprising a plurality of continuous ribs arranged substantially parallel along a first development axis; a plurality of first continuous filaments arranged substantially parallel to one another and transversally of the plurality of ribs; the first filaments are constrained to the ribs at nodes lying in a first lie plane; a plurality of second continuous filaments arranged substantially parallel to one another and transversally to the plurality of ribs; the second continuous filaments are constrained to the ribs at nodes lying in a second lie plane; the second lie plane is opposite the first lie plane with respect to the ribs; the plurality of first and second filaments define an internal volume of the net structure comprised between the first and the second lie plane; the internal volume is subdivided by the plurality of ribs into a predetermined number of substantially parallel channels and the first filaments and the ribs define in the first lie plane a series of windows having a substantially polygonal shape configured such as to enable, in use conditions of the net structure, passage of solid material towards the internal volume and in that the second filaments and the ribs define in the second lie plane a series of windows having a substantially polygonal shape configured such as to enable, in use conditions of the net structure, passage of solid material towards the internal volume.

In a further aspect according to any one of the preceding aspects, the plurality of first filaments and/or the plurality of second filaments exhibit, in a perpendicular view to the respective lie plane, a width having a decreasing progression starting from a node up to a halfway line and an increasing progression from the halfway line up to the next node.

In a further aspect according to any one of the preceding aspects the plurality of ribs and/or the first filaments and/or the second filaments are made of a plastic material, for example based on polypropylene, and microscopically exhibit fibrous structures defining configurations of the molecules of the plastic material which are at least partially orientated.

In a further aspect according to any one of the preceding aspects the second filaments are defined by laminar structures and exhibit flat surfaces, substantially lying in the respective lie plane.

In a further aspect according to any one of the preceding aspects the first filaments and the ribs define, in the first lie plane, a series of windows having a substantially polygonal shape configured such as to allow, in use conditions of the net structure, passage of solid material towards the internal volume and wherein the second filaments and the ribs define, in the second lie plane, a series of windows having a substantially polygonal shape configured such as to allow, in use conditions of the net structure, passage of solid material towards the internal volume.

In a further aspect according to any one of the preceding aspects, the net structure does not comprise filter elements, especially in a form of layers of textile or non-woven textile, covering the substantially polygonal-shaped windows of the first and/or the second lie plane.

In a further aspect according to any one of the preceding aspects, the windows of the first and/or the second lie plane remain open and accessible to the solid material, especially comprising detritus, stones and/or earth, when the net structure is in use in a finished product form.

In a further aspect according to any one of the preceding aspects, the substantially polygonal windows in the first lie plane are positioned offset, in particular translated with respect to the first development axis, with respect to the substantially polygonal windows positioned in the second lie plane.

In a further aspect according to any one of the preceding aspects, the plurality of continuous ribs exhibit, in a perpendicular view to the lie plane thereof, a height at the nodes which is greater than the height of the zone comprised between a node and a next.

In a further aspect according to any one of the preceding aspects, each node, in a perpendicular view to the lie plane of the first and the second plurality of filaments, exhibits a substantially flat trapeze-shaped configuration, with concave sides constituted by arched portions.

In a further aspect according to any one of the preceding aspects, the continuous ribs extend substantially from the first lie plane to the second lie plane substantially along the whole longitudinal development thereof along the development axis.

In a further independent aspect, or an aspect according to any one of the preceding aspects, a method is comprised for realising a net structure which comprises steps of: coextruding a plurality of continuous ribs arranged substantially parallel along a first development axis and a plurality of first and second continuous filaments arranged substantially parallel to one another, transversal to the plurality of ribs and lying respectively in a first lie plane and a second lie plane opposite the first lie plane with respect to the ribs such as to create an internal volume of the net structure comprised between the first and the second lie plane and such as to define a semifinished three-dimensional net, the internal volume being subdivided by the plurality of ribs in a predetermined number of substantially parallel channels; performing a stretching operation on at least the first and/or the second filaments along the respective development axis; optionally performing a stretching operation of the ribs along the respective development axis.

In a further aspect according to the preceding aspect the method comprises a step of not constraining filtering elements at the substantially polygonal profiled windows in the first and the second lie plane.

In a further independent aspect, or an aspect according to any one of the preceding aspects, use is comprised of a net structure in geotechnical applications, comprising positioning the structure in a site to be conditioned and at least partially filling the channels with the material constituting the site.

In a further aspect according to the preceding independent aspect the method comprises the step of unremovably coupling at least a substantially flat first filtering element located at one of the lie planes, substantially in an external position to the internal volume of the net structure, in particular the coupling step following the stretching step of the first and/or second filaments along the respective development axis, the first filtering element being unremovably constrained to the nodes and/or the first and/or second filaments.

In a further aspect according to the preceding aspect the method comprises the step of unremovably coupling at least a substantially flat second filtering element located at one of the lie planes, substantially in an external position to the internal volume of the net structure, the second filtering element being unremovably constrained to the nodes and/or the first and/or second filaments.

In a further aspect according to any one of the preceding aspects, a method is comprised for realising a net structure comprising steps of coextruding the continuous ribs, the first and second filaments for defining a net semi-finished workpiece; performing a stretching operation at least of the ribs and/or the first and/or the second filaments along the respective development axis; not constraining filtering elements at the substantially polygonal profiled windows.

Further characteristics and advantages will emerge in greater detail in a description of a preferred but not exclusive embodiment of a net structure according to the accompanying tables of drawings.

### BRIEF DESCRIPTION OF THE DRAWINGS

- Figure 1 illustrates a perspective view partially from above of a net structure according to some aspects described in the following;
- Figure 2 is the net structure in a view from above;

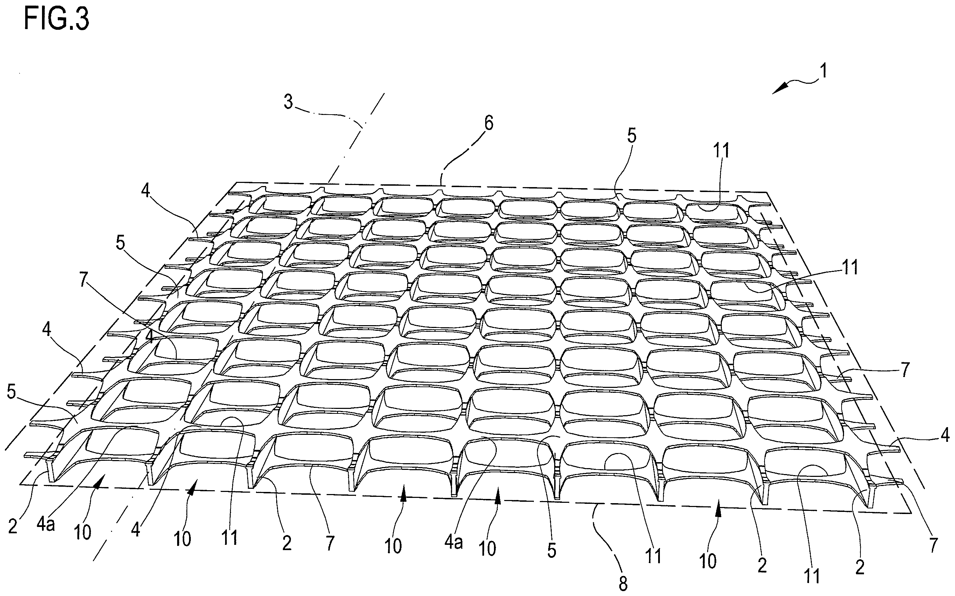

- Figure 3 shows the net structure in a lateral perspective view;
- Figure 4 is a view from above of a pair of nodes of the net structure of figure 1;
- Figure 5 is a lateral view of a portion of the net structure of figure 1;
- Figures 6 and 7 illustrate an embodiment of the micromolecular structure of the material constituting the net structure according to the prior art (figure 6) and according to some aspects of the embodiment described in the following (figure 7);
- Figure 8 is a first variant of the net of figure 1;
- Figure 9 is a transversal section of the new of figure 8;
- Figure 10 is a further embodiment of the net of figure 1;
- Figure 11 is a transversal section of the net of figure 10;
- Figure 12 is a perspective view of a semi-finished workpiece suitable for obtaining the net of figure 1;
- Figure 13 is a view from above of the semi-finished workpiece of figure 12; and
- Figure 14 is a section along axis XIV-XIV of the semi-finished workpiece of figure 12.

### DETAILED DESCRIPTION

With reference to the figures, 1 denotes in its entirety a net structure, particularly for geotechnical applications.

Looking at the attached figures, it can initially be seen that the net structure comprises a plurality of substantially parallel continuous ribs 2 arranged along a first axis of development 3.

Also present are a plurality of first substantially continuous filaments 4 arranged parallel to one another and transversal to the plurality of ribs 2 to which they are constrained at respective nodes 5.

As can be seen from the accompanying figures, the plurality of first continuous filaments is arranged with their axis 17 substantially perpendicular to the first axis of development 3; each first continuous filament 4 is arranged in a same lie plane 6 which is positioned at an upper surface of the plurality of continuous ribs 2.

Correspondingly, and on the opposite side with respect to the first lie plane 6 with respect to the ribs 2, a plurality of second substantially continuous filaments 7 are present, also arranged parallel to one another and transversal to the ribs 2.

In detail the second filaments 7 are also constrained to the ribs at the respective nodes 5 and all lie in a same second lie plane 8.

In fact the two lie lines are parallel to one another and spaced exactly for the height of the above-mentioned plurality of continuous ribs 2.

In particular, the continuous ribs 2 exhibit a height that is substantially similar/comparable to the distance between the two lie planes 6, 8.

In fact, the plurality of first and second filaments 4, 7, define an internal volume of the net structure 1, which is comprised between the first and second lie plane 6, 8.

This internal volume is divided in turn into a predetermined number of 10 channels each defined by two respective flanked continuous ribs 2.

The ribs 2 define continuous lateral walls 10 delimiting the channels 10. In particular the walls extend substantially along the entire length of the rib 2 - along the axis of development 17 - and also extend over substantially the entire height between a lie plane 6 and another 8.

The network structure is constituted by plastic material, in particular polypropylene.

In addition, the net structure is a monolithic element constituted by the above-mentioned continuous ribs 2, the first continuous filaments 4 and the second continuous filaments 7.

Observing the net structure at the first lie plane of the first lie plane 6, the first filaments 4 and the ribs 2 can be seen to define a series of substantially polygonal windows 11.

In detail, with regard to the perpendicular geometry of the respective axes, the windows 11 are substantially rectangular or square; in the illustrated example the relation between two sides of the rectangular shape is about 1;1.1

Note also that the windows will all be of the same shape or different shapes when the first continuous filaments 4 and/or the continuous ribs 2 are not equally spaced as shown in the attached drawings.

In fact the particular illustrated embodiment shows a plurality of equally spaced continuous ribs 2 between them, as well as a first plurality of continuous filaments 4, also equally spaced and a plurality of continuous second filaments 7 equally spaced from each other by a distance equal to that between two continuous adjacent filaments 4 of the first series.

In this way the windows 11 defined on the first lie plane 6 and on the second lie plane 8 have substantially the same surface and geometry.

Note that at this point, advantageously, each of the windows 11 is generally speaking of dimensions such as to allow the passage of solid material into the internal volume 9 and thus successive application of a filter element (as better clarified in the following) serves to enable passage of the liquids towards the inside of the net but prevents passage of debris internally of the channels that might otherwise become obstructed.

Observing the net structure in greater detail, the polygonal windows 11 located on the first lie plane 6 are in an offset position, and in detail are translated along the first axis of development 3 with respect to the windows 11 located in the second lie plane 8.

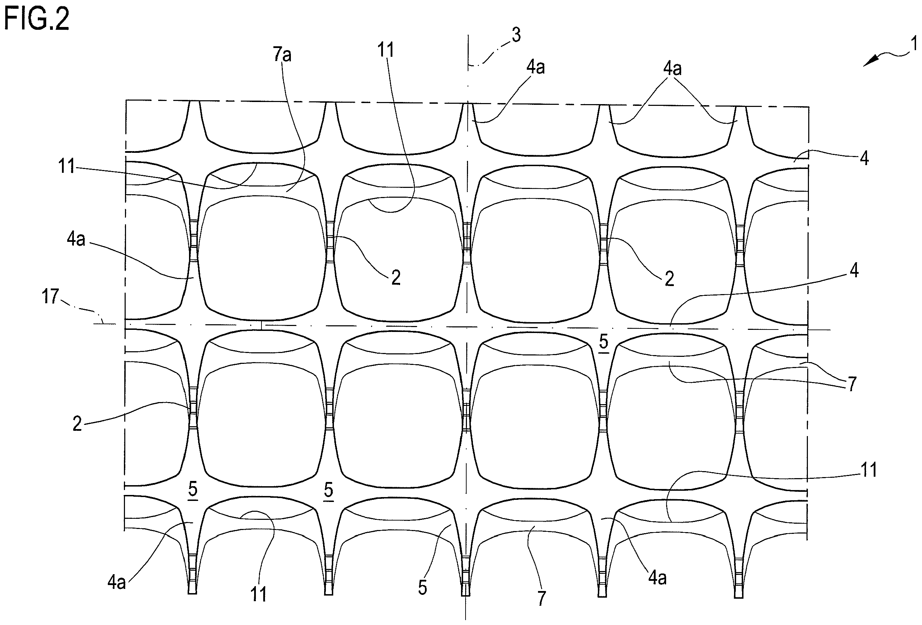

This means that in a perpendicular view to each of the lie planes, both the first and the second filaments 4, 7 are visible (see figure 2).

Looking in detail at the net structure, in a perpendicular view to the respective lie plane the first plurality of filaments 4 and the second plurality of filaments 7 exhibit a width L that has a decreasing-increasing progression as it goes from one node 5 to the next node 5.

In particular, the width L starts from a maximum at the node and then decreases in a non-linear but progressive fashion up to the halfway line 12, and then performs substantially an inverse, i.e. increasing progression, non-linearly up to the next node.

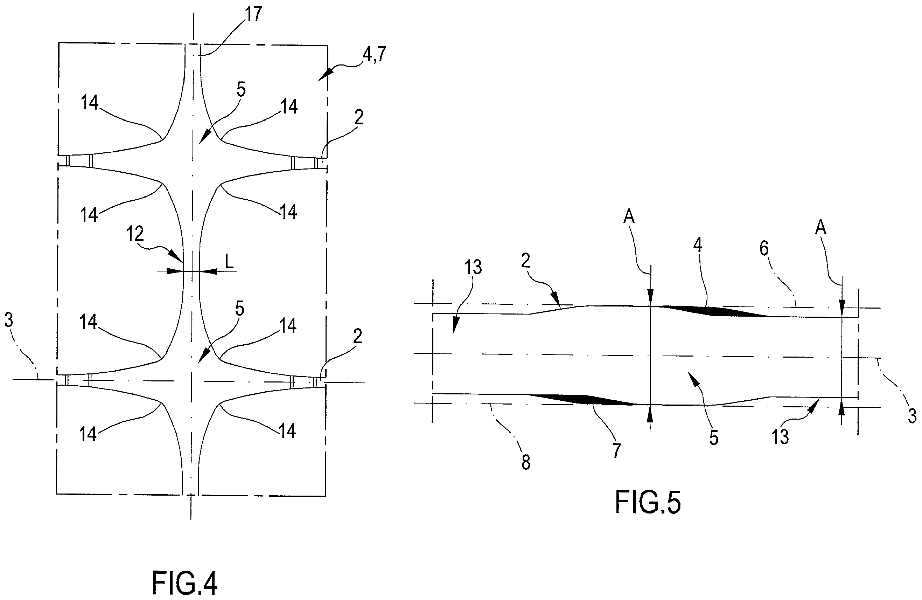

See figure 4 for an illustration of this.

As also seen in the accompanying figures the first filaments 4 and/or the second filaments 7 are defined by structures exhibiting flat surfaces 4a, 7a lying in the lie planes 6, 8.

In other words, the first and second filaments 4, 7 are in the form of strips (in particular their section recalls a rectangular cross section) which are thin and have smaller dimensions than the transversal development (as defined in the direction of the axis 17) and the longitudinal development (defined in the direction of the axis 3); this substantially flat configuration makes the filaments more likely to cooperate with and engage to the filter element to be applied to the net.

Note of course that the progression is a mean progression and should not be interpreted in the strict geometric sense because, as will be clarified herein below, the structure is obtained through the operations of extrusion/coextrusion and stretching of the plastic material and therefore there will be certain irregularities present in the overall structure arising inherently from the manufacturing process used.

The extension of the continuous ribs is different according to the point at which the rib itself is observed along the axis of development 3.

In particular, in a perpendicular view from the plane of development thereof, the continuous ribs 2 have a height A at the nodes 5 which is greater than the height in the zone 13 comprised between a node and a next node.

This progression is evidenced in figure 5.

Returning to observe figure 4, each node 5, in a view perpendicular to its lie plane, has a substantially flat trapezoidal configuration with concave sides constituted by arched portions 14 or in any case curved portions.

As mentioned this area of the node is substantially flat and in fact increases the surface at each of the lie planes so as to better distribute the compressive stresses on the net structure.

From the point of view of production, the net structure is co-extruded in a single operation by contemporaneously realising the longitudinal ribs 2, the first continuous filaments 4 and the second continuous filaments 7.

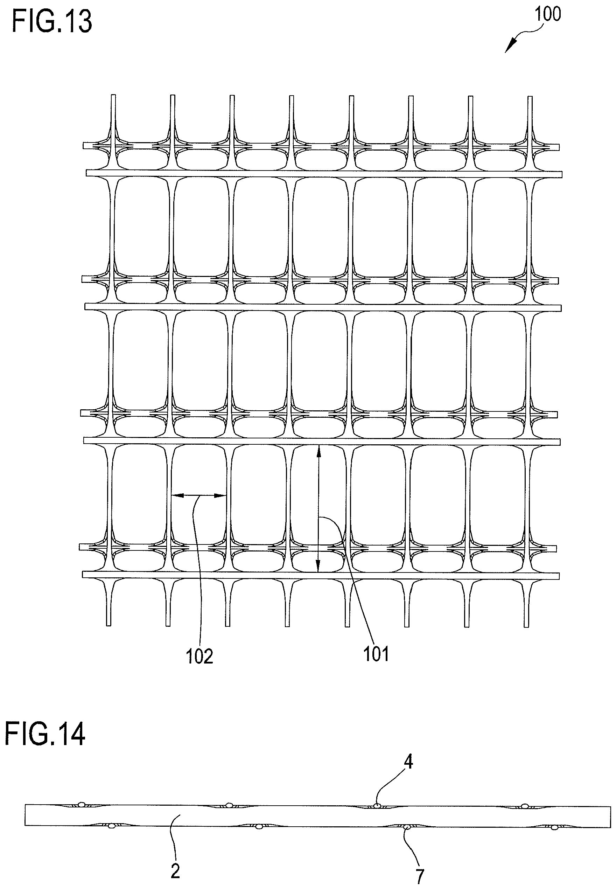

In detail, a sub-step of extrusion of the longitudinal ribs 2 occurs, on which the tow orders of filaments 4, 7 are applied before solidification, at the respective lie planes 6, 8. In this step, the filaments 4, 7 have a certainly irregular section due to the plasticity of the material but which tends to assume, generally speaking, a circular section (see figure 14).

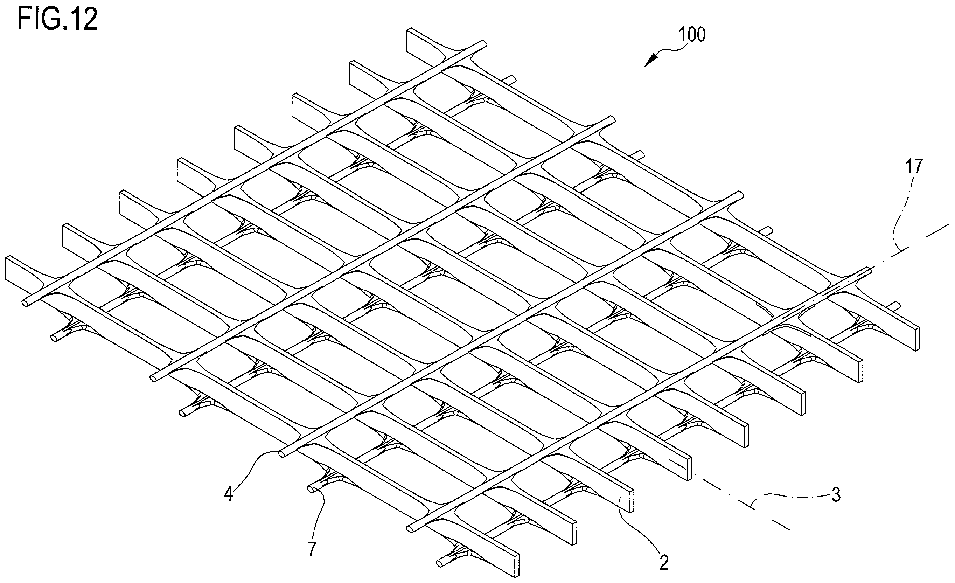

The semi-finished workpiece 100, thus obtained, is shown in figure 12 in a perspective view and in figure 13 in a plan view.

As can be seen from the last figure, there are elongate rectangular windows in which the ratio between the longitudinal dimensions 101 and the transversal dimensions 102 is comprised between 6:1 and 1.5:1, for example is comprised between 4:1 and 2:1 and in general is about 3:1. Prior to complete solidification thereof the net is then stretched in at least one of the axes of development axes 3, 17.

In other words, the net is extended by stretching at least one of the ribs and/or the first and/or the second filaments.

In general, the configuration used is that of a net that enables increasing the mechanical strength characteristics against stress forces, while also reducing the weight per unit area.

In detail, the draw ratio in the extrusion direction (MD) of the production machine is between 1 and 4, more particularly between 1.1 and 2 and will by way of example be around 1.2; the direction MD coincides with the development direction of the longitudinal ribs (axis of development 3).

The draw ratio in the transversal direction (TD) to the extrusion direction of the production machine is between 1 and 7, more particularly between 2 and 5 and will be by way of example be about 3.5; the direction TD coincides with the development direction of the axis of the transversal filaments (axis of development 17).

The step of stretching the filaments brings them to modify the configuration thereof in section from circular to flat, with the flat surfaces lying in the respective lie planes.

The overall thickness of the transversal filaments and the ribs is comprised between 4 and 6.8 mm; in more detail it is within the range of 4.5 to 6.3 mm and is centred at about 5.4 mm.

Note that after the stretching step the first and the second continuous filaments 4, 7 define, in the respective lie planes, a series of substantially rectangular windows (almost square in the illustrated example) with a ratio between the long side and the short side comprised between 6:1 and 1:1, in particular comprised between 4:1 and 1:1 and about 1.1:1.

It should be noted also that the stretching operation described above has an effect at the level of the molecular structure of the plastic, such that for each of the stretched ribs and/or the stretched filaments, fibrous structures 15 are created defining at least partially orientated configurations 16 of the molecules of the plastic material.

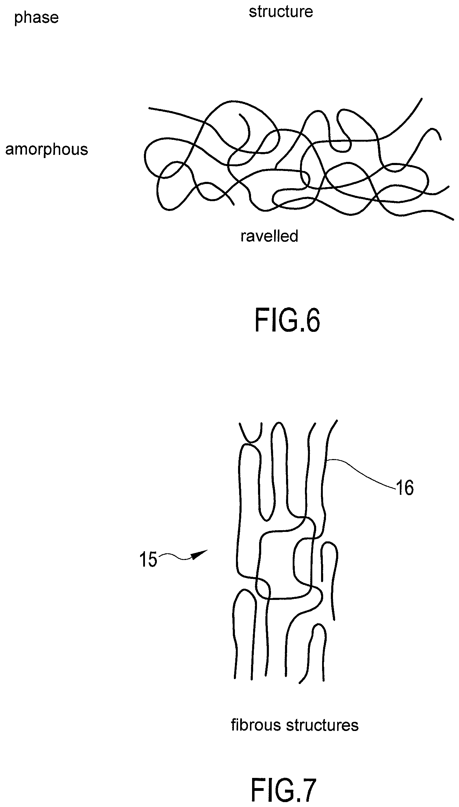

This configuration is illustrated in figure 7.

Through stretching, i.e. a cutting action, structures are thus generated following a molecular positioning; these structures facilitate considerable increases in mechanical resistance and rigidity in the desired direction and the superstructures are indicated as fibrous structures.

In still other words, the material passes from an amorphous phase with a structure that can be defined as ravelled (see figure 6) and a structure that is at least partially oriented.

This molecular orientation with parallel arrangement of the molecules generates a corresponding anisotropy of the properties of the material, producing, in the orientation direction, an increase in rigidity.

Further, the stretching operation of the first and second filaments 4, 7 along the respective development axis 3 and/or the stretching operation of the ribs 2 along the respective development axis 17 is performed up to defining at most a ratio between the height of the ribs (understood as the distance between the two lie planes 6, 8) and the distance between two ribs 2 which run adjacently that is less that 1:7 and in particular the ratio is in any case greater than 1:2. A ratio of greater than 1:7 would lead to the collapse of the mesh under the effect of the weight of the terrain, obstructing the channels between two flanked ribs and causing the structure to lose effectiveness in terms of drainage.

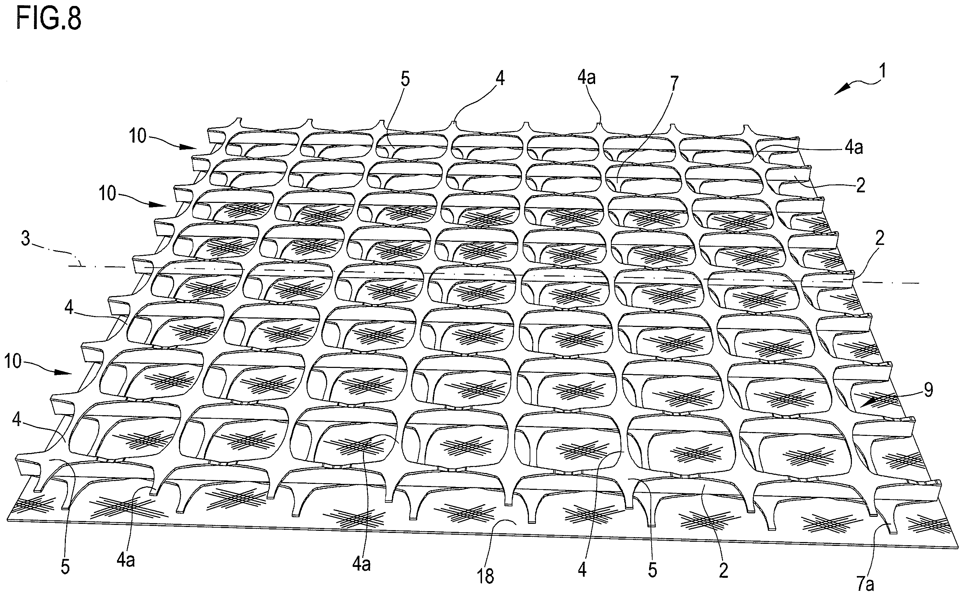

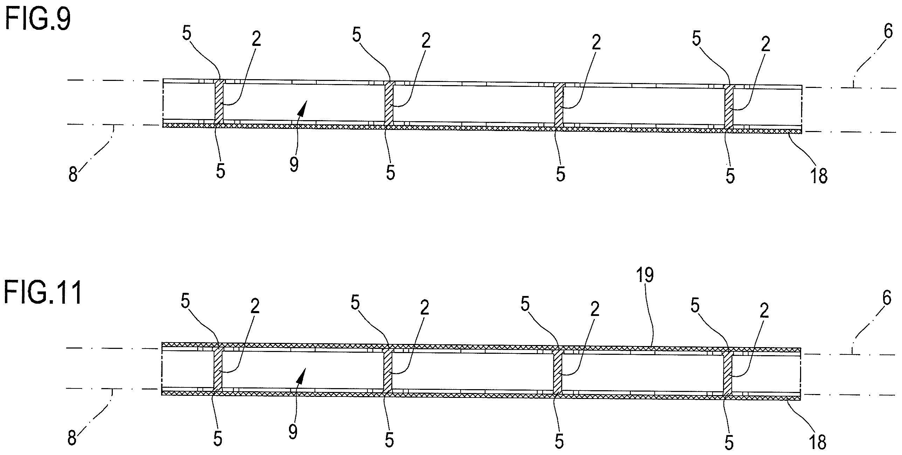

The embodiment of figures 8 and 9 shows a net structure with a first filter element 18 coupled, preferably unremovably (welded, glued or otherwise), to the first or second filaments 4, 7.

In general, the coupling is direct, i.e. without interposition of other layers or elements between the filaments 4, 7 and the first filter element 18. The flat surface 4a, 7a facilitates the coupling thanks to the greater contact surface, which contributes to the solidity of the engagement between the parts.

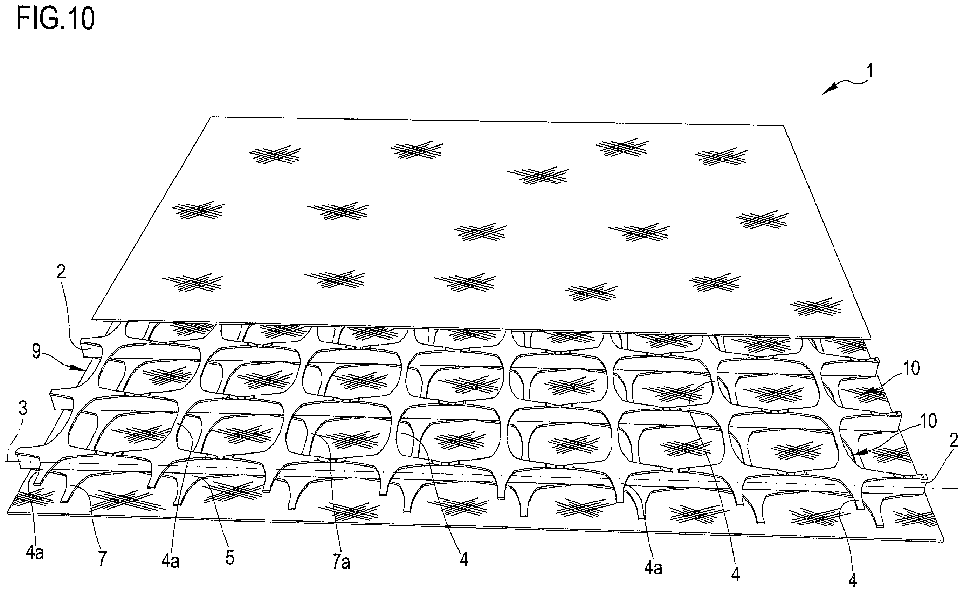

The example of figures 10 and 11 shows a reticular structure that exhibits two filter elements 18, 19 coupled at the two opposite lie planes 18, 19 in the same manner as described above.

This further type of structure defines channels 10 in which, under use conditions, only a liquid (water) and eventually any dust can enter, while any solid material larger than those of the cavity that pass through the filter element 18, 19 is confined to the outside, thus allowing the correct and maximum flow of the water in the channels, substantially free of debris.

Note that all the technical features described with reference to the first embodiment are also present in the second and third embodiment described above.

The net structure of the invention is generally used in geotechnical applications, with an appropriate net area yardage for a site to be addressed.

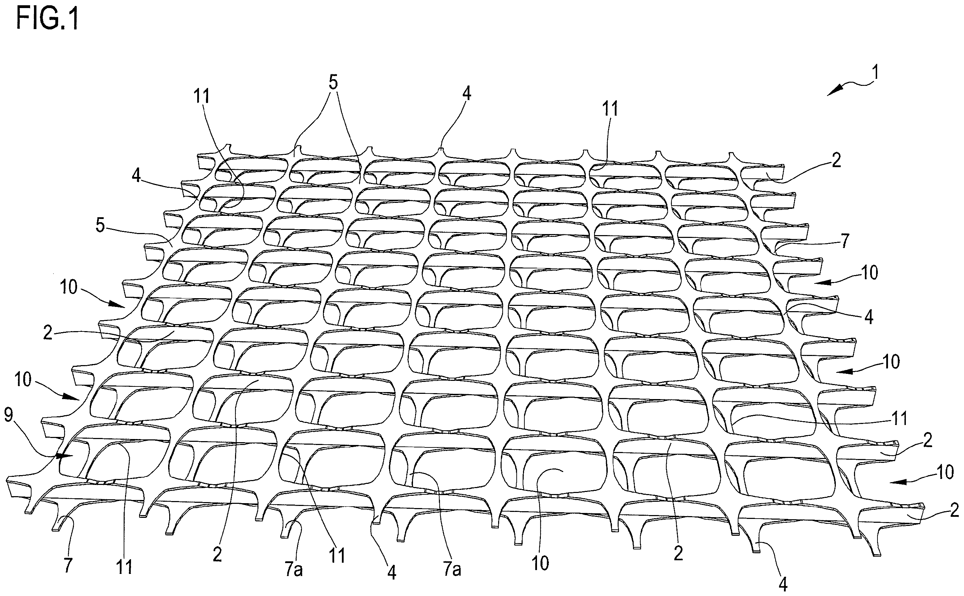

Since there might be no closure elements of the windows, as in the example shown in figure 1, the material constituting the site where the structure is placed tends to fill the channels 10. Despite this filling phenomenon, the structure retains a good filtering capacity as the continuous longitudinal ribs direct the flow of liquids according to the orientation of the network. Furthermore, the ribs (with the cooperation of the structures defined by the flat transversal filaments) retain the terrain, thus exerting a mechanical containing pressure.

Surprisingly therefore, the presence of solid material within the channels does not completely obstruct the outflow of the liquid which continues to be directed, but ensures an optimal coupling with the net structure and the terrain and maintains it in position.

Disposal is also facilitated because the product is made from a single and same material.

In addition, the increased upper and lower surface (guaranteed by the flat geometry of the first and second filaments and nodes) greatly improves the load distribution.

In this situation the three-dimensional net product lends itself well to a perfect coupling with any filter elements present, providing an improved engagement to one another (figures 8 and 10). The net structure is, weight for weight, considerably more rigid, so the size of the channels and/or the windows can be varied while ensuring that the integrity of the structure is maintained. The structure of the object of the description is particularly advantageously applicable in various sites among which is presented by way of example and therefore not limited to road embankments, banks, areas used as landfill.

## Claims

1. A net structure, in particular for geotechnical applications, comprising:
a plurality of continuous ribs (2) arranged substantially parallel along a first development axis (3);
a plurality of first continuous filaments (4) arranged substantially parallel to one another and transversally of the plurality of ribs (2), the first filaments (4) being constrained to the ribs (2) at nodes (5) lying in a first lie plane (6);
a plurality of second continuous filaments (7) arranged substantially parallel to one another and transversally of the plurality of ribs (2), the second continuous filaments (7) being constrained to the ribs at nodes (5) lying in a second lie plane (8), the second lie plane (8) being opposite the first lie plane (6) with respect to the ribs (2), the plurality of first and second filaments (4, 7) defining an internal volume (9) of the net structure (1) comprised between the first and the second lie plane (6, 8), the internal volume (9) being sub-divided by the plurality of ribs into a predetermined number of channels (10) that are substantially parallel, at least the first filaments (4) and/or the second filaments (7) being defined by laminar structures exhibiting respective flat surfaces (4a; 7a) that substantially lie in the respective lie plane (6, 8);
**characterized by** the fact that the net structure further comprises at least a substantially flat first filter element (18) located at one of the lie planes (6, 8) substantially in an external position to the internal volume (9) of the net structure, the first filter element (18) being unremovably constrained to the nodes (5) and/or to the first and/or second filaments (4, 7).

2. The structure of the preceding claim, wherein the plurality of first filaments (4) and/or the plurality of second filaments (7) exhibit, in a perpendicular view to the respective lie plane (6, 8), a width (L) having a decreasing progression starting from a node (5) up to a halfway line (12) and an increasing progression from the halfway line (12) up to the next node (5).

3. The structure of any one of the preceding claims 1 or 2, wherein the plurality of ribs (2) and/or the first filaments (4) and/or the second filaments (7) are made of a plastic material, for example based on polypropylene, and microscopically exhibit fibrous structures (15) defining configurations of the molecules of the plastic material which are at least partially orientated.

4. The structure of any one of the preceding claims from 1 to 3 further comprising a substantially flat second filter element (19) located at the other of the lie planes (6, 8) substantially in an external position to the internal volume (9) of the net structure, the second filter element (19) being unremovably constrained to the nodes (5) and/or to the first and/or second filaments (4, 7).

5. The structure of any one of the preceding claims from 1 to 4, wherein the substantially polygonal windows (11) in the first lie plane (6) are positioned offset, in particular translated with respect to the first development axis (3), with respect to the substantially polygonal windows (11) positioned in the second lie plane.

6. The structure of any one of the preceding claims from 1 to 5, wherein the plurality of continuous ribs (2) exhibit, in a perpendicular view to the lie plane thereof, a height (A) at the nodes (5) which is greater than the height of the zone (13) comprised between a node and a next, the continuous ribs (2) extending substantially from the first lie plane (6) to the second lie plane (8) substantially along a whole longitudinal development thereof along the development axis (17).

7. The structure of any one of the preceding claims from 1 to 6, wherein each node (5), in a perpendicular view to the lie plane (6, 8) of the first and the second plurality of filaments (4, 7), exhibits a substantially flat trapeze-shaped configuration, with concave sides constituted by arched portions (14).

8. The structure of any one of the preceding claims from 1 to 7, wherein the first and second continuous filaments (4, 7) define, in the respective lie planes, a series of substantially rectangular windows with ratios between the long side and the short side comprised between 6:1 and 1:1, in particular comprised between 4:1 and 1:1 and about 1.1:1.

9. A method for realising a net structure for geotechnical applications, the net structure having:
a plurality of continuous ribs (2) arranged substantially parallel along a first development axis (3);
a plurality of first continuous filaments (4) arranged substantially parallel to one another and transversally of the plurality of ribs (2), the first filaments (4) being constrained to the ribs (2) at nodes (5) lying in a first lie plane (6);
a plurality of second continuous filaments (7) arranged substantially parallel to one another and transversally of the plurality of ribs (2), the second continuous filaments (7) being constrained to the ribs at nodes (5) lying in a second lie plane (8), at least the first filaments (4) and/or the second filaments (7) being defined by laminar structures exhibiting respective surfaces (4a, 7a) which are flat and which lie substantially in the respective lie plane (6, 8), the second lie plane (8) being opposite the first lie plane (6) with respect to the ribs (2), the plurality of first and second filaments (4, 7) defining an internal volume (9) of the net structure (1) comprised between the first and the second lie plane (6,8), the internal volume (9) being subdivided by the plurality of ribs into a predetermined number of channels (10) that are substantially parallel;
the method comprising steps of:
- coextruding a plurality of continuous ribs (2) arranged substantially parallel along a first development axis (3) and a plurality of first and second continuous filaments (4, 7) arranged substantially parallel to one another, transversal to the plurality of ribs (2) and lying respectively in a first lie plane (6) and a second lie plane (8) opposite the first lie plane (6) with respect to the ribs (2) such as to create an internal volume of the net structure (1) comprised between the first and the second lie plane (6, 8) and such as to define a semi-finished three-dimensional net, the first and second continuous filaments (4, 7) defining, in the respective lie planes, a series of substantially polygonal windows, in particular rectangular, the internal volume (9) being subdivided by the plurality of ribs (2) into a predetermined number of substantially parallel channels (10);
- performing a stretching operation on at least the first and/or the second filaments (4, 7) along the respective development axis (3) in order for the respective surfaces (4a; 7a) thereof to take on a flat configuration substantially lying in the respective lie plane (6, 8);
- optionally performing a stretching operation of the ribs (2) along the respective development axis (17),
**characterized by** the fact that the method further comprises a step of unremovably coupling at least a substantially flat first filter element (18) located at one of the lie planes (6, 8) substantially in an external position to the internal volume (9) of the net structure.

10. The method of claim 9, wherein the step of coupling the first filter element (18) is successive to the step of stretching the first and/or second filaments (4, 7) along the respective development axis (3), the first filter element (18) being unremovably constrained to the nodes (5) and/or to the first and/or second filaments (4, 7);
the method optionally comprising a step of unremovably coupling a second substantially flat filter element (19) located at the other of the lie planes (6, 8) substantially in an external position to the internal volume (9) of the net structure, the second filter element (19) being unremovably constrained to the nodes (5) and/or to the first and/or second filaments (4, 7).

11. The method of claim 9 or 10, comprising performing a stretching operation on at least the first and/or the second filaments (4, 7) along the respective development axis (3) and/or optionally performing a stretching operation of the ribs (2) along the respective development axis (17) up to defining at most a ratio between the height of the ribs (2), taken as a distance between two lie planes (6, 8) and a distance between two ribs (2) running adjacent, of less than 1:7 and in particular more than 1:2.

12. The method of any one of the preceding claims from 9 to 11, wherein the step of stretching the first and second filaments (4, 7) along the respective development axis (3) is performed with a stretching ratio comprised between 1:1.1 and 1.7, more in particular between 1:2 and 1:5, and by way of example about 1:3.5.

13. The method of any one of the preceding claims from 9 to 12, wherein the step of stretching the ribs (2) along the respective development axis (17) is performed with a stretching ratio comprised between 1:1.1 and 1:3, more in detail between 1:1.1 and 1:2 and will be, by way of example, about 1:1.2.

14. The method of any one of the preceding claim from 9 to 13, wherein the step of co-extruding a plurality of continuous ribs (2) and a plurality of first and second continuous filaments (4, 7) comprises a sub-step of extruding the plurality of continuous ribs (2) arranged substantially parallel along the first development axis (3) and a sub-step of applying, on the already-extruded ribs at the first lie plane of the plurality, first continuous filaments (4) in the form of filaments of irregular and substantially circular section and/or a sub-step of application on the already-extruded ribs at the second lie plane of the plurality of second continuous filaments (7) in a form of filaments having irregular and substantially circular section.

15. The method of any one of the preceding claims from 9 to 14, wherein the first and second continuous filaments (4, 7) define, in the respective lie planes of the semi-finished three-dimensional net, a series of substantially elongate rectangular windows with a ratio between the long side and the short side comprised between 6:1 and 1.5:1, for example comprised between 4:1 and 2:1 and about 3:1, in particular the first and the second continuous filaments (4, 7) defining, in the respective lie planes after the steps of stretching, a series of substantially rectangular windows with a ratio between a long side and a short side thereof being comprised between 6:1 and 1:1, in particular comprised between 4:1 and 1:1 and about 1.1:1.

## Patentansprüche

1. Netzstruktur, insbesondere für geotechnische Anwendungen, umfassend:
eine Mehrzahl von fortlaufenden Rippen (2), welche im Wesentlichen parallel entlang einer ersten Erstreckungssachse (3) angeordnet sind;
eine Mehrzahl von ersten fortlaufenden Filamenten (4), welche im Wesentlichen parallel zueinander und quer zu der Mehrzahl von Rippen (2) angeordnet sind, wobei die ersten Filamente (4) auf den Rippen (2) an Knoten (5) gehalten sind, welche in einer ersten liegeebene (6) liegen;
eine Mehrzahl von zweiten fortlaufenden Filamenten (7), welche im Wesentlichen parallel zueinander und quer zu der Mehrzahl von Rippen (2) angeordnet sind, wobei die zweiten fortlaufenden Filamente (7) auf den Rippen (2) an Knoten (5) gehalten sind, welche in einer zweiten Liegeebene (8) liegen, wobei die zweite liegeebene (8) der ersten Liegeebene (6) in Bezug auf die Rippen (2) gegenüberliegt, wobei die Mehrzahl von ersten und zweiten Filamenten (4, 7) ein internes Volumen (9) der Netzstruktur (1) definieren, welches zwischen der ersten und der zweiten Liegeebene (6, 8) eingeschlossen ist, wobei das interne Volumen (9) durch die Mehrzahl von Rippen in eine vorbestimmte Anzahl von Kanälen (10) unterteilt ist, die im Wesentlichen parallel sind, wobei wenigstens die ersten Filamente (4) und/oder die zweiten Filamente (7) durch Laminare Strukturen definiert sind, welche jeweilige flache Oberflächen (4a; 7a) aufweisen, die im Wesentlichen in der jeweiligen Liegeebene (6, 8) liegen;
**gekennzeichnet durch** die Tatsache, dass die Netzstruktur ferner wenigstens ein im Wesentlichen flaches erstes Filterelement (18) umfasst, welches sich in einer der Liegeebene (6, 8) im Wesentlichen in einer externen Position zu dem internen Volumen (9) der Netzstruktur befindet, wobei das erste Filterelement (18) unlösbar an den Knoten (5) und/oder an den ersten und/oder zweiten Filamenten (4, 7) gehalten ist.

2. Struktur nach dem vorhergehenden Anspruch, wobei die Mehrzahl von ersten Filamenten (4) und/oder die Mehrzahl von zweiten Filamenten (7) in einer senkrechten Ansicht zu der jeweiligen Liegeebenen (6, 8) eine Breite (L) aufweisen, welche eine abnehmende Progression ausgehend von einem Knoten (5) bis zu einer Mittellinie (12) und eine zunehmende Progression von der Mittellinie (12) bis zu dem nächsten Knoten (5) aufweist.

3. Struktur nach einem der vorhergehenden Ansprüche 1 oder 2, wobei die Mehrzahl von Rippen (2) und/oder die ersten Filamente (4) und/oder die zweiten Filamente (7) aus einem Kunststoffmaterial, beispielsweise auf Basis Polypropylene, hergestellt sind, und mikroskopisch Faserstrukturen (15) aufweisen, welche Konfigurationen der Moleküle des Kunststoffmaterials definieren, welche wenigstens zum Teil orientiert sind.

4. Struktur nach einem der vorhergehenden Ansprüche 1 bis 3, ferner umfassend ein im Wesentlichen flaches zweites Filterelement (19), welches sich in der anderen der Liegeebene (6, 8) im Wesentlichen in einer externen Position zu dem internen Volumen (9) der Netzstruktur befindet, wobei das zweite Filterelement (19) unlösbar an den Knoten (5) und/oder an den ersten und/oder zweiten Filamenten (4, 7) gehalten ist.

5. Struktur nach einem der vorhergehenden Ansprüche 1 bis 4, wobei die im Wesentlichen polygonalen Fenster (11) in der ersten Liegeebene (6) in Bezug auf die in der zweiten Liegeebene positionierten im Wesentlichen polygonalen Fenster (11) versetzt positioniert sind, insbesondere in Bezug auf die erste Erstreckungssachse (3) verlagert.

6. Struktur nach einem der vorhergehenden Ansprüche 1 bis 5, wobei die Mehrzahl von fortlaufenden Rippen (2), in einer senkrechten Ansicht zu der Liegeebene davon, eine Höhe (A) an den Knoten (5) aufweisen, welche Größer als die Höhe der Zone (13) zwischen einem Knoten und einem nächsten ist, wobei sich die fortlaufenden Rippen (2) im Wesentlichen von der ersten Liegeebene (6) zu der zweiten Liegeebene (8) im Wesentlichen entlang einer gesamten Längserstreckung davon entlang der Erstreckungsachse (17) erstrecken.

7. Struktur nach einem der vorhergehenden Ansprüche 1 bis 6, wobei jeder Knoten (5), in einer senkrechten Ansicht zu der Liegeebene (6, 8) der ersten und der zweiten Mehrzahl von Filamenten (4, 7), eine im Wesentlichen flache Trapezförmige Konfiguration mit durch Bogenförmige Abschnitte (14) gebildeten konkaven Seiten aufweist.

8. Struktur nach einem der vorhergehenden Ansprüche 1 bis 7, wobei die ersten und zweiten fortlaufenden Filamenten (4, 7) in den jeweiligen Liegeebenen eine Reihe von im Wesentlichen rechteckigen Fenstern mit Verhältnissen zwischen der langen Seite und der kurzen Seite zwischen 6:1 und 1:1, insbesondere zwischen 4:1 und 1:1 und etwa 1,1:1, definieren.

9. Verfahren zur Herstellung einer Netzstruktur für geotechnische Anwendungen, wobei die Netzstruktur aufweist:
eine Mehrzahl von fortlaufenden Rippen (2), welche im Wesentlichen parallel entlang einer ersten Erstreckungssachse (3) angeordnet sind;
eine Mehrzahl von ersten fortlaufenden Filamenten (4), welche im Wesentlichen parallel zueinander und quer zu der Mehrzahl von Rippen (2) angeordnet sind, wobei die ersten Filamente (4) auf den Rippen (2) an Knoten (5) gehalten sind, welche in einer ersten Liegeebene (6) liegen;
eine Mehrzahl von zweiten fortlaufenden Filamenten (7), welche im Wesentlichen parallel zueinander und quer zu der Mehrzahl von Rippen (2) angeordnet sind, wobei die zweiten fortlaufenden Filamente (7) auf den Rippen an Knoten (5) gehalten sind, welche in einer zweiten Liegeebene (8) liegen, wobei wenigstens die ersten Filamente (4) und/oder die zweiten Filamente (7) durch Laminare Strukturen definiert sind, welche jeweilige Oberflächen (4a; 7a) aufweisen, welche flach sind und welche im Wesentlichen in der jeweiligen Liegeebene (6, 8) liegen, wobei die zweite Liegeebene (8) der ersten Liegeebene (6) in Bezug auf die Rippen (2) gegenüberliegt, wobei die Mehrzahl von ersten und zweiten Filamenten (4, 7) ein internes Volumen (9) der Netzstruktur (1) definieren, welches zwischen der ersten und der zweiten Liegeebene (6, 8) eingeschlossen ist, wobei das interne Volumen (9) durch die Mehrzahl von Rippen in eine vorbestimmte Anzahl von Kanälen (10) unterteilt ist, die im Wesentlichen parallel sind;
wobei das Verfahren folgende Schritte umfasst:
- Koextrudieren einer Mehrzahl von fortlaufenden Rippen (2), welche im Wesentlichen parallel entlang einer ersten Erstreckungsachse (3) angeordnet sind, und einer Mehrzahl von ersten und zweiten fortlaufenden Filamenten (4, 7), welche im Wesentlichen parallel zueinander, quer zu der Mehrzahl von Rippen (2) angeordnet sind und jeweils in einer ersten Liegeebene (6) und einer zweiten Liegeebene (8) gegenüber der ersten Ebene (6) in Bezug auf die Rippen (2) liegen, um ein internes Volumen der Netzstruktur (1) zu erzeugen, welches zwischen der ersten und der zweiten Liegeebene (6, 8) eingeschlossen ist, und um ein halbfertiges dreidimensionales Netz zu definieren, wobei die ersten und zweiten fortlaufenden Filamente (4, 7) in den jeweiligen Liegeebenen eine Reihe von im Wesentlichen polygonalen, insbesondere rechteckigen Fenstern definieren, wobei das interne Volumen (9) durch die Mehrzahl von Rippen (2) in eine vorbestimmte Anzahl von im Wesentlichen parallelen Kanälen (10) unterteilt ist;
- Durchführen eines Streckungsvorgangs an wenigstens den ersten und/oder den zweiten Filamenten (4, 7) entlang der jeweiligen Erstreckungsachse (3), um für die jeweiligen Oberflächen (4a; 7a) davon eine im Wesentlichen in der jeweiligen Liegeebene (6, 8) liegende flache Konfiguration bereitzustellen;
- gegebenenfalls Durchführen eines Streckungsvorgangs der Rippen (2) entlang der jeweiligen Erstreckungsachse (17),
**gekennzeichnet durch** die Tatsache, dass das Verfahren ferner einen Schritt eines unlösbaren Koppelns wenigstens eines im Wesentlichen flachen ersten Filterelements (18) umfasst, welches sich in einer der Liegeebene (6, 8) im Wesentlichen in einer externen Position zu dem internen Volumen (9) der Netzstruktur befindet.

10. Verfahren nach Anspruch 9, wobei der Schritt des Koppelns des ersten Filterelements (18) auf den Schritt des Streckens der ersten und/oder zweiten Filamente (4, 7) entlang der jeweiligen Erstreckungsachse (3) folgt, wobei das erste Filterelement (18) unlösbar an den Knoten (5) und/oder an den ersten und/oder zweiten Filamenten (4, 7) gehalten ist; wobei das Verfahren gegebenenfalls einen Schritt eines unlösbaren Koppelns eines zweiten im Wesentlichen flachen Filterelements (19) umfasst, welches sich in der anderen der Liegeebene (6, 8) im Wesentlichen in einer externen Position zu dem internen Volumen (9) der Netzstruktur befindet, wobei das zweite Filterelement (19) unlösbar an den Knoten (5) und/oder an den ersten und/oder zweiten Filamenten (4, 7) gehalten ist.

11. Verfahren nach Anspruch 9 oder 10, umfassend ein Durchführen eines Streckungsvorgangs an wenigstens den ersten und/oder den zweiten Filamenten (4, 7) entlang der jeweiligen Erstreckungsachse (3) und/oder gegebenenfalls ein Durchführen eines Streckungsvorgangs der Rippen (2) entlang der jeweiligen Erstreckungsachse (17) bis zu einem Definieren höchstens eines Verhältnisses zwischen der Höhe der Rippen (2), angenommen als Abstand zwischen zwei Liegeebenen (6, 8) und einem Abstand zwischen zwei benachbarten verlaufenden Rippen (2), von weniger als 1:7 und insbesondere mehr als 1:2.

12. Verfahren nach einem der vorhergehenden Ansprüche 9 bis11, wobei der Schritt des Streckens der ersten und zweiten Filamente (4,7) entlang der jeweiligen Erstreckungsachse (3) in einem Streckungsverhältnis zwischen 1:1,1 und 1:7 durchgeführt wird, insbesondere zwischen 1:2 und 1:5 und als Beispiel etwa 1:3,5.

13. Verfahren nach einem der vorhergehenden Ansprüche 9 bis 12, wobei der Schritt des Streckens der Rippen (2) entlang der jeweiligen Erstreckungsachse in einem Streckungsverhältnis zwischen 1:1,1 und 1:3 durchgeführt wird, detaillierter zwischen 1:1,1 und 1:2 und wird als Beispiel etwa 1:1,2 sein.

14. Verfahren nach einem der vorhergehenden Ansprüche 9 bis13, wobei der Schritt des Koextrudierens einer Mehrzahl von fortlaufenden Rippen (2) und einer Mehrzahl von ersten und zweiten fortlaufenden Filamenten (4, 7) einen Unterschritt des Extrudierens der Mehrzahl von fortlaufenden Rippen (2), welche im Wesentlichen parallel entlang der ersten Erstreckungsachse (3) angeordnet sind, und einen Unterschritt eines Aufbringens erster fortlaufenden Filamente (4) auf die bereits extrudierten Rippen in der ersten Liegeebene der Mehrzahl in Form von Filamenten mit unregelmäßigem und im Wesentlichen kreisförmigem Querschnitt und/oder einen Unterschritt eines Aufbringens der zweiten fortlaufenden Filamente (7) auf die bereits extrudierten Rippen in der zweiten Liegeebene der Mehrzahl in einer Form von Filamenten mit unregelmäßigem und im Wesentlichen kreisförmigem Querschnitt umfasst.

15. Verfahren nach einem der vorhergehenden Ansprüche 9 bis 14, wobei die ersten und zweiten fortlaufenden Filamente (4, 7) in den jeweiligen Liegeebenen des halbfertigen dreidimensionalen Netzes eine Reihe von im Wesentlichen länglich rechteckigen Fenstern mit einem Verhältnis zwischen der langen Seite und der kurzen Seite zwischen 6:1 und 1,5:1 definieren, zum Beispiel zwischen 4:1 und 2:1 und etwa 3:1, wobei insbesondere die ersten und die zweiten fortlaufenden Filamente (4, 7) in den jeweiligen Liegeebenen nach den Schritten des Streckens eine Reihe von im Wesentlichen rechteckigen Fenstern mit einem Verhältnis zwischen einer langen Seite und einer kurzen Seite davon zwischen 6:1 und 1:1 definieren, insbesondere zwischen 4:1 und 1:1 und etwas 1,1:1.

## Revendications

1. Structure en filet, en particulier destinée aux applications géotechniques, comprenant :
une pluralité de nervures continues (2) disposées de manière sensiblement parallèle le long d'un premier axe de développement (3);
une pluralité de premiers filaments continus (4) disposés de manière sensiblement parallèle l'un par rapport à l'autre et transversalement à la pluralité des nervures (2), les premiers filaments (4) étant contraints aux nervures (2) au niveau des noeuds (5) s'étendant dans un premier plan de repos (6);
une pluralité de seconds filaments continus (7) disposés de manière sensiblement parallèle l'un par rapport à l'autre et transversalement à la pluralité des nervures (2), les seconds filaments continus (7) étant contraints aux nervures au niveau des noeuds (5) s'étendant dans un second plan de repos (8), le second plan de repos (8) étant opposé au premier plan de repos (6) par rapport aux nervures (2), la pluralité des premiers et seconds filaments (4, 7) définissant un volume interne (9) de la structure en filet (1) comprise entre le premier et le second plan de repos (6, 8), le volume interne (9) étant subdivisé par la pluralité des nervures en un nombre prédéterminé de canaux (10) qui sont sensiblement parallèles, au moins les premiers filaments (4) et/ou les seconds filaments (7) étant définis par des structures laminaires faisant preuve de surfaces plates respectives (4a ; 7a) qui reposent sensiblement dans le plan de repos respectif (6, 8);
**caractérisée par le fait que** la structure en filet comprend en outre au moins un premier élément filtre sensiblement plat (18) localisé au niveau des plans de repos (6, 8) sensiblement en une position externe par rapport au volume interne (9) de la structure en filet, le premier élément filtre (18) étant contraint de manière non amovible aux noeuds (5) et/ou aux premiers et/ou aux seconds filaments (4, 7).

2. Structure selon la revendication précédente, la pluralité des premiers filaments (4) et/ou la pluralité des seconds filaments (7) faisant preuve, dans une vue perpendiculaire au plan de repos respectif (6, 8), d'une largeur (L) ayant une progression décroissante en partant depuis un noeud (5) jusqu'à une ligne médiane (12) et une progression croissante depuis la ligne médiane (12) jusqu'au noeud suivant (5).

3. Structure selon l'une quelconque des revendications précédentes 1 ou 2, dans laquelle la pluralité des nervures (2) et/ou des premiers filaments (4) et/ou des seconds filaments (7) est constituée d'un matériau plastique, par exemple à base de polypropylène, et fait preuve microscopiquement de structures fibreuses (15) définissant des configurations des molécules du matériau plastique qui sont au moins partiellement orientées.

4. Structure selon l'une quelconque des revendications précédentes de 1 à 3 comprenant en outre un second élément filtre sensiblement plat (19) localisé au niveau de l'autre des plans de repos (6, 8) sensiblement en position externe par rapport au volume interne (9) de la structure en filet, le second élément filtre (19) étant contraint de manière non amovible aux noeuds (5) et/ou aux premiers et/ou aux seconds filaments (4, 7).

5. Structure selon l'une quelconque des revendications précédentes de 1 à 4, les fenêtres sensiblement polygonales (11) dans le premier plan de repos (6) étant positionnées de manière décalée, en particulier en translation par rapport au premier axe de développement (3), par rapport aux fenêtres sensiblement polygonales (11) positionnées dans le second plan de repos.

6. Structure selon l'une quelconque des revendications précédentes de 1 à 5, la pluralité des nervures continues (2) faisant preuve, en vue perpendiculaire à leurs plans de repos, d'une hauteur (A) au niveau des noeuds (5) qui est supérieure à la hauteur de la zone (13) comprise entre un noeud et le suivant, les nervures continues (2) s'étendant sensiblement depuis le premier plan de repos (6) jusqu'au second plan de repos (8) sensiblement le long de leur développement longitudinal complet le long de l'axe de développement (17).

7. Structure selon l'une quelconque des revendications précédentes de 1 à 6, chaque noeud (5), en vue perpendiculaire au plan de repos (6, 8) de la première et de la seconde pluralité de filaments (4, 7), faisant preuve d'une configuration en forme de trapèze sensiblement plate, avec des côtés concaves constitués de parties arquées (14).

8. Structure selon l'une quelconque des revendications précédentes de 1 à 7, les premiers et les seconds filaments continus (4, 7) définissant, dans les plans de repos respectifs, une série de fenêtres sensiblement rectangulaires avec des rapports entre le côté long et le côté court compris entre 6:1 et 1:1, en particulier compris entre 4:1 et 1:1 et environ 1,1:1.

9. Procédé de réalisation d'une structure en filet pour des applications géotechniques, la structure en filet ayant :
une pluralité de nervures continues (2) disposées de manière sensiblement parallèle le long d'un premier axe de développement (3) ;
une pluralité de premiers filaments continus (4) disposés de manière sensiblement parallèle l'un par rapport à l'autre et transversalement à la pluralité des nervures (2), les premiers filaments (4) étant contraints aux nervures (2) au niveau des noeuds (5) s'étendant dans un premier plan de repos (6) ;
une pluralité de seconds filaments continus (7) disposés de manière sensiblement parallèle l'un par rapport à l'autre et transversalement à la pluralité des nervures (2), les seconds filaments continus (7) étant contraints aux nervures au niveau des noeuds (5) s'étendant dans un second plan de repos (8), au moins les premiers filaments (4) et/ou les seconds filaments (7) étant définis par des structures laminaires faisant preuve de surfaces respectives (4a, 7a) qui sont plates et qui s'étendent sensiblement dans le plan de repos respectif (6, 8), le second plan de repos (8) étant opposé au premier plan de repos (6) par rapport aux nervures (2), la pluralité des premiers et seconds filaments (4, 7) définissant un volume interne (9) de la structure en filet (1) comprise entre le premier et le second plan de repos (6, 8), le volume interne (9) étant subdivisé par la pluralité des nervures en un nombre prédéterminé de canaux (10) qui sont sensiblement parallèles; le procédé comprenant les étapes de :
- coextrusion d'une pluralité de nervures continues (2) disposées de manière sensiblement parallèle le long d'un premier axe de développement (3) et d'une pluralité de premiers et de seconds filaments continus (4, 7) disposés de manière sensiblement parallèle l'un par rapport à l'autre, transversaux à la pluralité des nervures (2) et s'étendant respectivement dans un premier plan de repos (6) et un second plan de repos (8) opposé au premier plan de repos (6) par rapport aux nervures (2) afin de créer un volume interne de la structure en filet (1) comprise entre le premier et le second plan de repos (6, 8) et afin de définir un filet tridimensionnel semi-fini, les premiers et les seconds filaments continus (4, 7) définissant, dans les plans de repos respectifs, une série de fenêtres sensiblement polygonales, en particulier rectangulaires, le volume interne (9) étant subdivisé par la pluralité des nervures (2) en un nombre prédéterminé de canaux sensiblement parallèles (10) ;
- l'exécution d'une opération d'étirage sur au moins les premiers et/ou les seconds filaments (4, 7) le long de l'axe de développement respectif (3) afin que leurs surfaces respectives (4a ; 7a) prennent une configuration plate s'étendant sensiblement dans le plan de repos respectif (6, 8) ;
- l'exécution facultativement d'une opération d'étirage des nervures (2) le long de l'axe de développement respectif (17),
**caractérisé par le fait que** le procédé comprend en outre une étape d'accouplement de manière non amovible d'au moins un premier élément filtre sensiblement plat (18) localisé à l'un des plans de repos (6, 8) sensiblement en une position externe vis-à-vis du volume interne (9) de la structure en filet.

10. Procédé selon la revendication 9, l'étape d'accouplement du premier élément filtre (18) est successive à l'étape d'étirage des premiers et/ou des seconds filaments (4, 7) le long de l'axe de développement respectif (3), le premier élément filtre (18) étant contraint de manière non amovible aux noeuds (5) et/ou aux premiers et/ou aux seconds filaments (4, 7) ;
le procédé comprenant éventuellement une étape d'accouplement de manière non amovible d'un second élément filtre sensiblement plat (19) localisé au niveau de l'autre des plans de repos (6, 8) sensiblement en une position externe vis-à-vis du volume interne (9) de la structure en filet, le second élément filtre (19) étant contraint de manière non amovible aux noeuds (5) et/ou aux premiers et/ou aux seconds filaments (4, 7).

11. Procédé selon la revendication 9 ou 10, comprenant l'exécution d'une opération d'étirage sur au moins les premiers et/ou les seconds filaments (4, 7) le long de l'axe de développement respectif (3) et/ou l'exécution de manière facultative d'une opération d'étirage des nervures (2) le long de l'axe de développement respectif jusqu'à définir au mieux un rapport entre la hauteur des nervures (2), prise comme une distance entre deux plans de repos (6, 8) et une distance entre deux nervures (2) s'étendant de manière adjacente, inférieur à 1:7 et en particulier de plus de 1:2.

12. Procédé selon l'une quelconque des revendications précédentes de 9 à 11, l'étape d'étirage des premiers et des seconds filaments (4, 7) le long de l'axe de développement respectif (3) étant exécutée sous un rapport d'étirage compris entre 1:1,1 et 1,7, plus particulièrement entre 1:2 et 1:5, et à titre d'exemple d'environ 1:3,5.

13. Procédé selon l'une quelconque des revendications précédentes de 9 à 12, l'étape d'étirage des nervures (2) le long de l'axe de développement respectif (17) étant exécutée sous un rapport d'étirage compris entre 1:1,1 et 1:3, plus précisément entre 1:1,1 et 1:2 et sera, à tire d'exemple, d'environ 1:1,2.

14. Procédé selon l'une quelconque des revendications précédentes de 9 à 13, l'étape de coextrusion d'une pluralité de nervures continues (2) et d'une pluralité de premiers et de seconds filaments continus (4, 7) comprenant une sous-étape d'extrusion de la pluralité de nervures continues (2) disposées de manière sensiblement parallèle le long du premier axe de développement (3) et une sous-étape d'application, sur les nervures déjà extrudées au niveau du premier plan de repos de la pluralité des premiers filaments continus (4) sous la forme de filaments de section irrégulière et sensiblement circulaires et/ou une sous-étape d'application sur les nervures déjà extrudées au niveau du second plan de repos de la pluralité des seconds filaments continus (7) en une forme de filaments présentant une section irrégulière et sensiblement circulaire.

15. Procédé selon l'une quelconque des revendications précédentes de 9 à 14, les premiers et les seconds filaments continus (4, 7) définissant, dans les plans de repos respectifs du filet tridimensionnel semi-fini, une série de fenêtres rectangulaires sensiblement allongées avec un rapport entre le côté long et le côté court compris entre 6:1 et 1,5:1, par exemple compris entre 4:1 et 2:1 et environ 3:1, en particulier les premiers et les seconds filaments continus (4, 7) définissant, dans les plans de repos respectifs après les étapes d'étirage, une série de fenêtres sensiblement rectangulaires avec un rapport entre leur côté long et leur côté court étant compris entre 6:1 et 1:1, en particulier compris entre 4:1 et 1:1 et environ 1,1:1.
